(19) Europäisches Patentamt
European Patent Office
Office européen des brevets

(11) **EP 3 231 110 B1**

(12) **EUROPEAN PATENT SPECIFICATION**

(45) Date of publication and mention
of the grant of the patent:
**17.05.2023 Bulletin 2023/20**

(21) Application number: **14815805.8**

(22) Date of filing: **11.12.2014**

(51) International Patent Classification (IPC):
*H04J 3/06* (2006.01)

(52) Cooperative Patent Classification (CPC):
**H04J 3/0667; H04J 3/0673**

(86) International application number:
**PCT/GB2014/053674**

(87) International publication number:
**WO 2016/092243 (16.06.2016 Gazette 2016/24)**

(54) **METHOD AND DEVICES FOR TIME TRANSFER USING END TO END TRANSPARENT CLOCKS**

VERFAHREN UND VORRICHTUNGEN ZUR ZEITÜBERTRAGUNG MITTEL TRANSPARENTEN TAKTEN ZWISCHEN ENDPUNKTEN

PROCÉDÉ ET DISPOSITIFS DE TRANSFERT TEMPOREL A L'AIDE D'HORLOGES TRANSPARENTES DE BOUT EN BOUT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.10.2017 Bulletin 2017/42**

(73) Proprietors:
• **Khalifa University of Science and Technology**
**Abu Dhabi (AE)**
• **British Telecommunications public limited
company**
**London EC1A 7AJ (GB)**
• **Emirates Telecommunications Corporation**
**Abu-Dhabi (AE)**

(72) Inventor: **AWEYA, James**
**Abu Dhabi (AE)**

(74) Representative: **J A Kemp LLP**
**80 Turnmill Street**
**London EC1M 5QU (GB)**

(56) References cited:
EP-A1- 2 709 298     WO-A1-2014/037685
US-B1- 8 718 482

• YANG PENGFEI ET AL: "New algorithm for IEEE 1588 time synchronization under the presence of significant delay variation", 2013 3RD INTERNATIONAL CONFERENCE ON CONSUMER ELECTRONICS, COMMUNICATIONS AND NETWORKS, IEEE, 20 November 2013 (2013-11-20), pages 419-422, XP032542552, DOI: 10.1109/CECNET.2013.6703359 ISBN: 978-1-4799-2859-0 [retrieved on 2014-01-03]
• ZONGPENG DU ET AL: "An Enhanced End-to-End Transparent Clock Mechanism with a Fixed Delay Ratio", IEEE COMMUNICATIONS LETTERS, IEEE SERVICE CENTER, PISCATAWAY, NJ, US, vol. 15, no. 8, 1 August 2011 (2011-08-01) , pages 872-874, XP011380842, ISSN: 1089-7798, DOI: 10.1109/LCOMM.2011.062911.110918
• XU XIONG ET AL: "A New Time Synchronization Method for Reducing Quantization Error Accumulation Over Real-Time Networks: Theory and Experiments", IEEE TRANSACTIONS ON INDUSTRIAL INFORMATICS, IEEE SERVICE CENTER, NEW YORK, NY, US, vol. 9, no. 3, 1 August 2013 (2013-08-01), pages 1659-1669, XP011524317, ISSN: 1551-3203, DOI: 10.1109/TII.2013.2238547 [retrieved on 2013-08-16]

• GIORGI G ET AL: "Performance analysis of Kalman filter-based clock synchronization in IEEE 1588 networks", PRECISION CLOCK SYNCHRONIZATION FOR MEASUREMENT, CONTROL AND COMMUNICATION, 2009. ISPCS 2009. INTERNATIONAL SYMPOSIUM ON, IEEE, PISCATAWAY, NJ, USA, 12 October 2009 (2009-10-12), pages 1-6, XP031570885, ISBN: 978-1-4244-4391-8

**Description**

Field of the Invention

The present invention relates to methods and devices for time transfer using transparent clocks. It is particularly, but not exclusively, concerned with methods and devices which make use of the residence times recorded by the transparent clocks.

Background of the Invention

IEEE 1588 PTP is now the industry accepted packet-based standard for distributing timing information from a master to enable the clocks of distributed systems to be synchronized with high precision (accuracies in the nanosecond levels).It is also designed for applications that cannot bear the cost of a GPS receiver at each node, or for which GPS signals are inaccessible. Relying on GPS for clock synchronization is not always practical (e.g., a base station may be in a tunnel or a large indoor facility) or its acceptance in certain regions of the world may be hindered by policies based on the reasoning that GPS is American owned. Hence, transferring timing via packet transport is a relevant synchronization technique that must coexist and interoperate with all others. However, the challenge here is packet delay variation (PDV) which represents a considerable noise component in the clock recovery system.

The IEEE 1588 PTP standard defines a wide range of synchronization capabilities except the clock recovery mechanisms (servo algorithm, phase-locked loop (PLL), timers, etc.) to be used at the receiver (slave) to synchronize its local clock to the master. The last pieces are vendor and proprietary solutions and are often product differentiators.

The slave clock synchronization accuracy is heavily dependent upon how well the path delay experienced by the PTP message between master and slave is known. Any non-deterministic delays within this path will translate to an error in the time offset calculations, thus degrading the synchronization accuracy unless compensated for. The non-deterministic latency behavior on the path is a consequence of the resource contention and store and forward architecture of packet transport, which consequently decrease time synchronization accuracies.As described below, IEEE 1588 end-to-end ("E2E") transparent clocks ("TCs") measure and update for the device residence time (device transit time) in a field of the PTP message. These updates allow the slave clock to compensate for the variability that exists on the path when synchronizing its clock to the master clock.

*Overview of IEEE 1588v2 PTP*

The GrandMaster (GM) is the root timing reference in a domain and transmits synchronization information to the clocks residing in its domain. In IEEE 1588v2 PTP messages are categorized into event and general messages. All IEEE 1588 PTP messages have a common header. Event messages are timed messages in that an accurate timestamp is generated at both transmission and receipt of each message. Event messages have to be accurately timestamped since the accuracy in transmission and receipt timestamps directly affects clock distribution accuracy. A timestamp event is generated at the time of transmission and reception of any event message. General messages are not required to be timestamped. The set of event messages consists of Sync, Delay_Req, Pdelay_Req, and Pdelay_Resp. The set of general messages consists of Announce, Follow_Up, Delay_Resp, Pdelay_Resp_Follow_Up, Management, and Signaling.

IEEE 1588 PTP allows for two different types of timestamping methods, either one-step or two-step. One-step clocks update time information within event messages (Sync and Delay-Req) on-the-fly, while two-step clocks convey the precise timestamps of packets in general messages (Follow_Up and Delay-Resp).

The Sync, Delay_Req, Follow_Up, and Delay_Resp messages are used to generate and communicate the timing information needed to synchronize ordinary and boundary clocks (see description below) using the delay request-response mechanism. A Sync message is transmitted by a master to its slaves and either contains the exact time of its transmission or is followed by a Follow_Up message containing this time. In a two-step ordinary or boundary clock, the Follow_Up message communicates the value of the departure timestamp for a particular Sync message. A Delay_Req message is a request for the receiving node to return the time at which the Delay_Req message was received, using a Delay_Resp message.

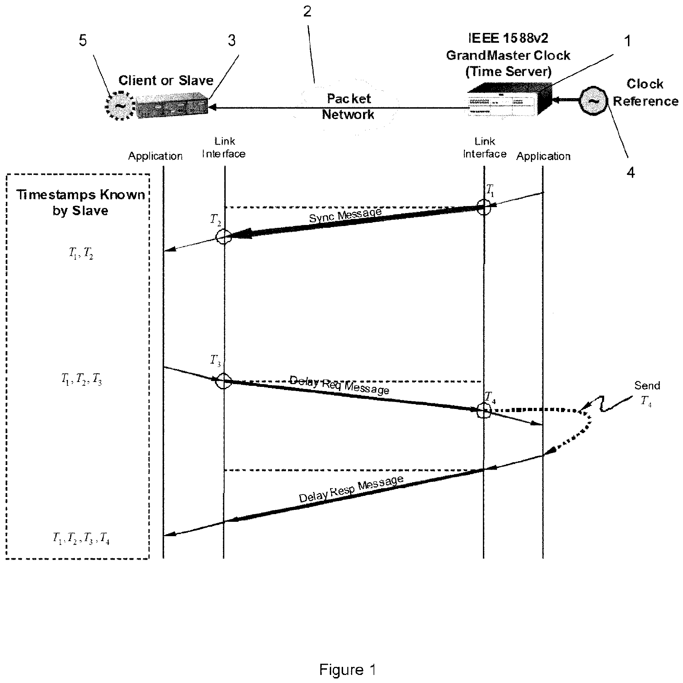

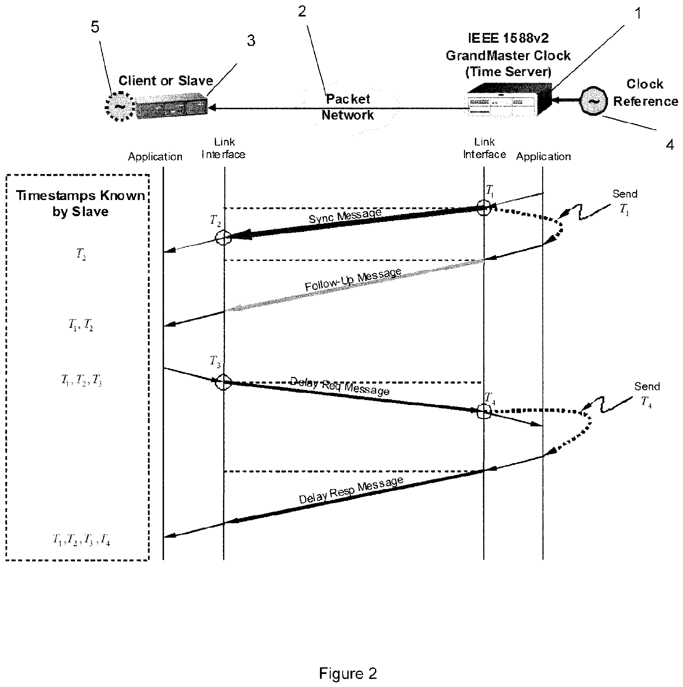

The basic pattern of synchronization message exchanges for the one-step and two-step clocks are illustrated in Figure 1 and Figure 2, respectively. The message exchange pattern for the two-step clock can be explained as follows. The master 1 sends a Sync message to the slave 3 over network 2 and notes the time T1 at which it was sent. The slave 3 receives the Sync message and notes the time of reception T2. The master 1 conveys to the slave the timestamp T1 by one of two ways: 1) Embedding the timestamp T1 in the Sync message. This requires some sort of hardware processing (i.e., hardware timestamping) for highest accuracy and precision. 2) Embedding the timestamp T1 in a Follow_Up message. Next, the slave sends a Delay_Req message to the master and notes the time T3 at which it was sent. The master 1 receives the Delay_Req message and notes the time of reception T4. The master 1 conveys to the slave 3 the timestamp T4 by embedding it in a Delay_Resp message.

At the end of this PTP messages exchange, the slave 3 possesses all four timestamps {T1, T2, T3, T4}. These timestamps may be used to compute the offset of the slave's clock 5 with respect to the master's clock 4 and the mean propagation time of messages between the two clocks. The computation of offset and propagation time often assumes that the master-to-slave and slave-to-master propagation times are equal, i.e. a symmetrical communication path.

IEEE 1588 ordinary clocks and boundary clocks configured for the delay request-response mechanism use the following event messages to generate and communicate timing information - Sync, Delay_Req, Follow_Up, Delay_Resp. The delay request-response mechanism is used to measure the path delay between a master and an ordinary or boundary clock. Peer-to-peer transparent clocks use a similar mechanism called the peer delay mechanism but with different PTP messages.

*Path Delay Measurements and Time Synchronization*

IEEE 1588 PTP requires an accurate measurement of the communication path delay between the time server (master) 1 and the client (slave) 3 for clock synchronization. PTP measures the exact message transmit time and receive times and uses these times to calculate the communication path delay and clock offset. This delay measurement principle determines path delay between devices on the network and the local clocks are adjusted for this delay using the series of messages sent between masters 1 and slaves 3 (Figure 1 and Figure 2). The one-way delay time is calculated by averaging the path delay of the transmit and receive messages. This calculation assumes a symmetrical communication path over the network 2; however, packet networks do not necessarily have symmetrical communication paths, due to the buffering process in the network nodes (resulting in asymmetrical packet delay times). To address this, PTP provides a method, using transparent clock devices (implemented in switches and routers), to measure and account for the delay experienced by PTP messages in a time-interval field in the PTPmessages. This setup makes the switches and routers temporarily transparent (from a synchronization point) to the master 1 and slave 3 nodes on the network.

*Transparent Clocks*

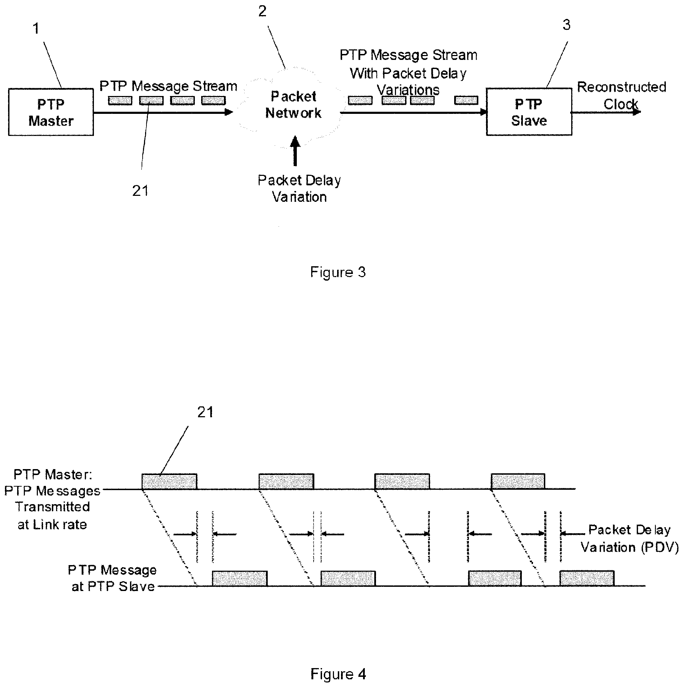

The processing and buffering of packets 21 in network devices (switches, routers, etc.) introduce variations in the time latency of packets 21 traversing the packet network 2 as illustrated in Figure 3 and Figure 4.The variations in these delays means that the assumption that packet delay is the same in each direction is invalid, thus rendering the path delay calculations of PTP inaccurate. This issue can been addressed with the use of boundary clocks and transparent clocks.

A transparent clock (TC) does not act as a master or slave, but instead bridges these two and forwards PTP event messages and provides corrections for the residence time across the bridge. Residence time is the delay between the reception and transmission of a PTP message through a transparent clock device. These delays must be fully accounted for in the slave time offset correction. The role of transparent clocks in a PTP network is to determine certain path delay parameters and update a time-interval field (the correction field) that is part of the PTP event message header. This update allows the terminating clock to compensate for switch delays when synchronizing it clock to the master. There are two types of transparent clocks (End-to-End TCs and Peer-to-Peer TCs) but this work deals only with the E2E TC.

*End-to-End (E2E) Transparent Clock*

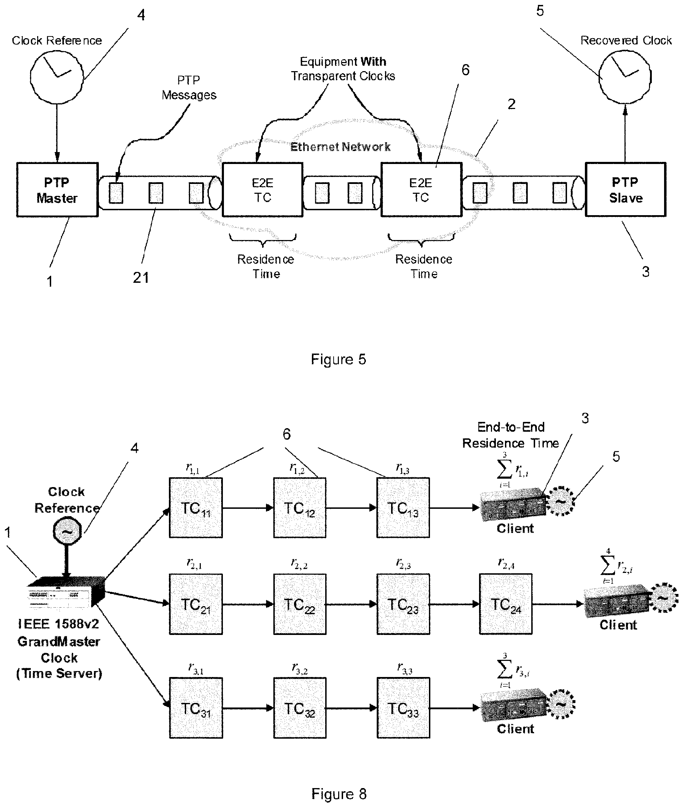

This is a multi-port device that is not a master or slave but a bridge between the two. This clock measures the message transit time (also known as resident time) in the device for (PTP event) Sync and Delay_Request messages as illustrated in Figure 5. This measured transit time is added to the correction field in the corresponding messages:

• The measured transit time of a Sync message is added to the correction field of the corresponding Sync or the Follow_Up message. In the one-step mode the residence time is added to the correction field of the Sync message; in the two-step mode the residence time is added to the correction field of the Follow_Up message.

• The measured transit time of a Delay_Request message is added to the correction field of the corresponding Delay_Response message.

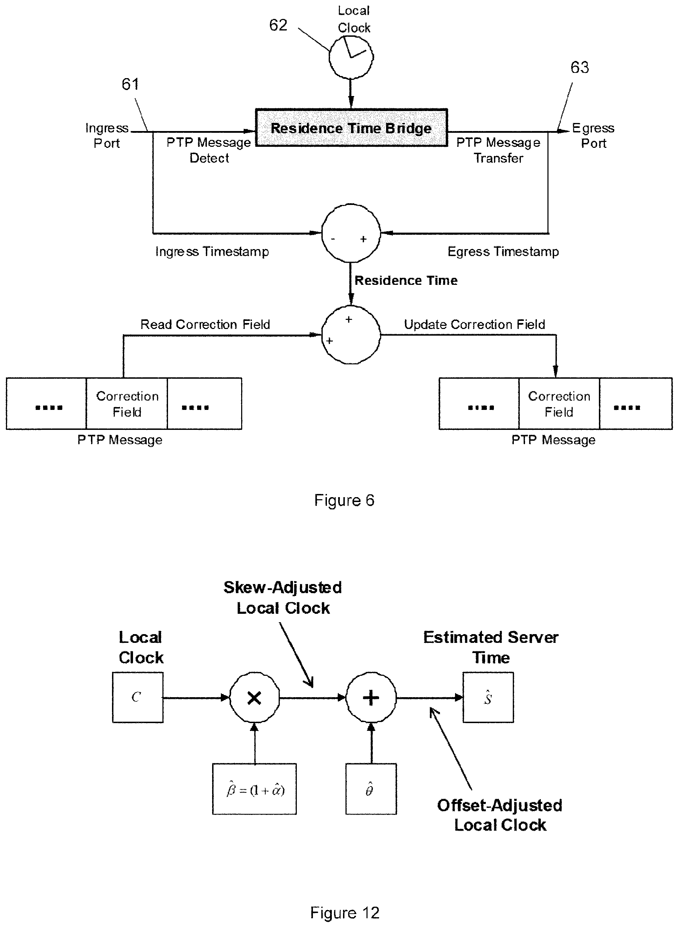

E2E TC devices 6 measure the delay the PTP packet resides in the TC device and increment the correction field in the PTP header as illustrated in Figure 6. A PTP message arriving at the ingress port 61 is detected and timestamped by the local clock 62. The Correction Field of the arriving PTP message is read out. When the PTP message reaches the egress port 63 of the TC, an egress timestamp is produced by the local clock 62. The TC calculates the difference between the ingress timestamp and the egress timestamp as the residence time in the TC. The Correction Field is then updated by adding the residence time in the TC to the existing value of the Correction Field in the outgoing PTP message.

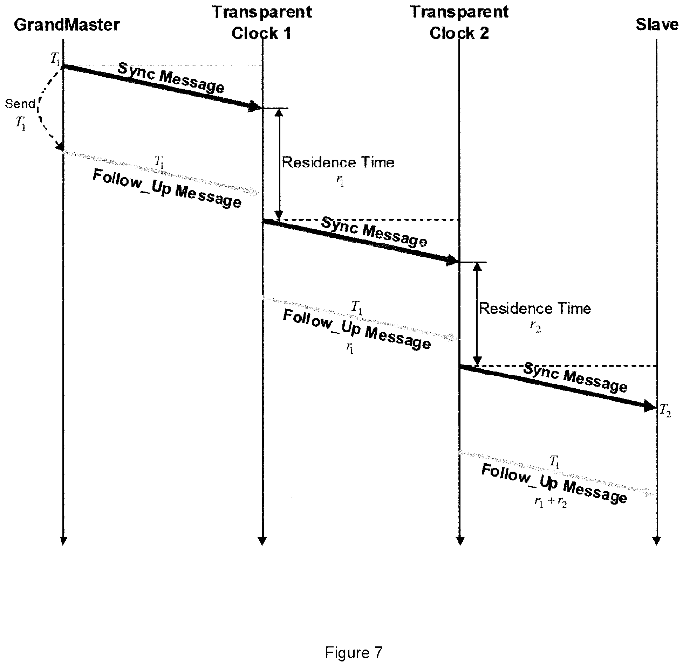

Figure 7 shows the flow of PTP messages through an example network of E2E TC devices. The correction field ends up containing the sum of all the residence times that a Sync or Delay_Request message has encountered on its way through all E2E-TC network elements on the path. By doing so, the slave clock or boundary clock further down the line can determine how long the PTP packet resided in the TC devices before it. The slave clock can then use the residence times accumulated in the correction field to mitigate the effects of PDV. This information is used by the slave when determining the offset between the slave's and the master's time. E2E transparent clocks do not provide correction for the propagation delay of the link itself between devices; only P2P TCs support this.

A one-step E2E TC updates for switch delay in Sync and Delay-Req messages as they pass through the switch while a two-step TC updates a field in the non time-critical general message (Follow_Up and Delay_Resp).

The process in Figure 7 continues hop by hop (where $N$ is the number of hops or links), and the Follow-Up (two-step mode), Sync (one-step mode) or Delay_Req (delay request-response mechanism) messages maintain a running total of the residence times; resulting in a grand total delay value from master to slave. Upon receipt of the final message, the slave device calculates its offset using the total residence time which is accumulated in the correction field as follows:

$$total\_residence\_time = \sum_{i=1}^{N-1} r_i$$

The present invention aims to provide methods and devices which improve on the estimations of skew and offset of a slave clock where timing messages have passed through one or more transparent clocks on the path from the master to the slave.

Document "Quantization Error Accumulation Over Real-Time Networks: Theory and Experiments", IEEE TRANSACTIONS ON INDUSTRIAL INFORMATICS, IEEE SERVICE CENTER, NEW YORK, NY, US, XU XIONG ET AL, discloses a Kalman filter-based clock servo adopted to estimate simultaneously the time offset and the skew between a slave node and a master node, with considering the quantization error in timestamping.

Summary of the Invention

At their broadest, aspects of the present invention provide for methods and devices for estimating skew and offset in a slave device where timing messages from the master device have passed through at least one transparent clock, which make use of the residence time(s) recorded by the or each transparent clock.

A first aspect of the present invention provides a method for estimating the skew and offset of a slave clock according to claim 1.

This method can improve time distribution accuracy by allowing slave devices to compensate for the message delivery variability across the network by using the recorded residence time(s) when estimating the skew and offset.

End-to-end transparent clocks may not synchronize their own clocks to the master clock and so may contain inaccuracies in their calculation of the residence times. However, the estimated skew and offset of the slave clock can still be improved.

The method may further include the step of synchronizing the output of the slave clock to the master clock using said estimated offset and skew. By using residence time measurements by the transparent clocks, very accurate clock synchronization may be achieved, possibly to levels comparable to GPS.

The Kalman filter allows measurements of a process observed over time, containing noise and other inaccuracies, to be used to produce values (estimates) that tend to be closer to the true values of the measurements and their associated calculated values.

The method of the present aspect may include any combination of some, all or none of the above described preferred and optional features.

The method of the above aspect is preferably implemented by a slave device or a system according to the second or third aspects of this invention, as described below, but need not be.

Further aspects of the present invention include computer programs for running on computer systems which carry out the method of the above aspect, including some, all or none of the preferred and optional features of that aspect.

A second aspect of the present invention provides a slave device according to claim 3.

The slave device of this aspect can have improved time distribution accuracy by being able to compensate for the message delivery variability across the network by using the recorded residence time(s) when estimating the skew and offset.

The processor may be further arranged to synchronize the output of the slave clock to the master clock using said estimated offset and skew. By using residence time measurements by the transparent clocks, very accurate clock synchronization may be achieved, possibly to levels comparable to GPS.

The Kalman filter allows measurements of a process observed over time, containing noise and other inaccuracies, to be used to produce values (estimates) that tend to be closer to the true values of the measurements and their associated calculated values.

The slave device of the present aspect may include any combination of some, all or none of the above described preferred and optional features.

A third aspect of the present invention provides a system according to claim 5.

The system of this aspect can have improved time distribution accuracy by allowing slave devices to compensate for the message delivery variability across the network by using the recorded residence time(s) when estimating the skew and offset.

The transparent clock(s) may be end-to-end transparent clocks. End-to-end transparent clocks may not synchronize their own clocks to the master clock and so may contain inaccuracies in their calculation of the residence times. However, the estimated skew and offset of the slave clock can still be improved.

The processor may be further arranged to synchronize the output of the slave clock to the master clock using said estimated offset and skew. By using residence time measurements by the transparent clocks, very accurate clock synchronization may be achieved, possibly to levels comparable to GPS.

The system of the present aspect may include any combination of some, all or none of the above described preferred and optional features.

Brief Description of the Drawings

Embodiments of the invention will now be described by way of example with reference to the accompanying drawings in which:

Figure 1 shows an overview of the one-step clock message flow under IEEE 1588 PTP and has already been described;

Figure 2 shows an overview of the two-step clock message flow under IEEE 1588 PTP and has already been described;

Figure 3 illustrates how a packet network can cause packet delay variation and has already been described;

Figure 4 illustrates the effects of packet delay variation on a generated PTP message stream and has already been described;

Figure 5 shows the general principles of clock transfer using End-to-End transparent clocks and has already been described;

Figure 6 shows how an End-to-End transparent clock updates the correction field and has already been described;

Figure 7 shows the PTP message flow through transparent clocks and has already been described;

Figure 8 shows a time distribution scheme using transparent clocks according to an embodiment of the present invention;

Figure 9 shows the processing of timing messages in a system and slave device according to embodiments of the present invention;

Figure 10 illustrates the clock model used to set out methods according to embodiments of the present invention;

Figure 11 shows the effects of path delays in a system according to an embodiment of the present invention; and

Figure 12 shows the steps for estimating the server time from the local clock in a slave device according to an embodiment of the present invention.

<u>Detailed Description</u>

Figure 8 shows a system according to an embodiment of the present invention in which the transparent clock devices on the communication path to each slave measure the delay the PTP packet resides in the TC device and increment the correction field in the PTP header. By doing so, the slave clock or boundary clock further down the line can determine how long the PTP packet resided in the TC devices before it. The slave can then use the values in the correction field to compensate for the effects PDV on its path when synchronizing it clock to the master.

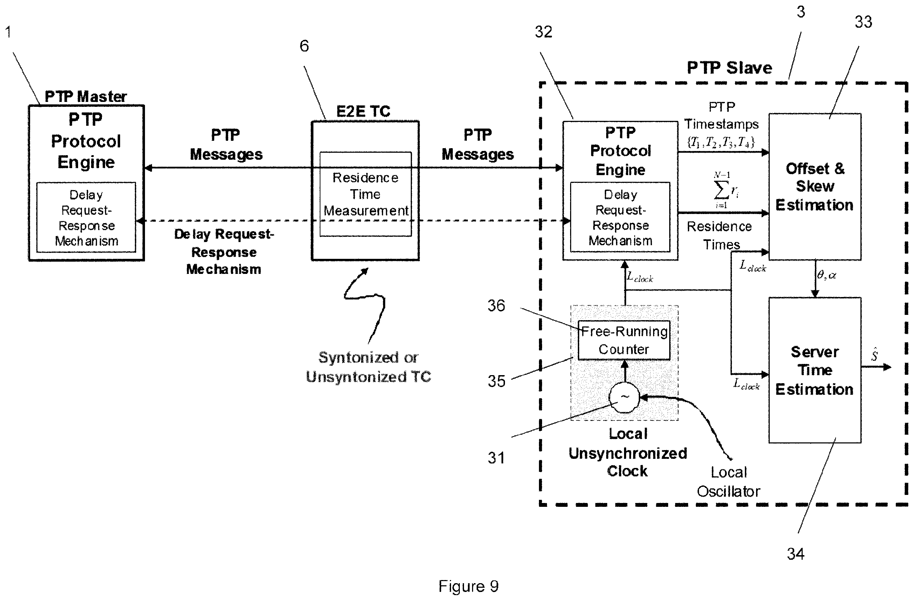

Figure 9 shows the main blocks of a synchronization technique according to an embodiment of the present invention as carried out at a PTP slave 3 which is a slave device according to a further embodiment of the present invention. A free running local oscillator 31 is used together with the estimated clock parameters to synthesize a synchronized local clock which is an estimated image of the server clock 4.The frequency of this client's local oscillator 31 is not adjusted, but it is allowed to free-run. This free running counter is used for timestamping and for synthesizing an image of the server clock (synchronized local clock) for the time client. The timestamps indicated in Figure 9 at the client are with respect to this local clock.

As shown in Figure 9, PTP messages are exchanged between the PTP master 1 and the PTP slave 3, passing through one or more End-to-End transparent clocks 6 on the network.

The slave has a local free-running clock 35 made up of a local oscillator 31 and a free-running counter 36. The timing signal from the clock 35 is provided to each of a PTP protocol engine 32, an offset and skew estimation unit 33 and a server time estimation unit or synchronizer 34.

The PTP protocol engine 32 receives and handles the PTP message exchange between the slave 3 and the master 1, including timestamping incoming PTP messages, extracting timestamps from said messages and passing said timestamps to the offset and skew estimation unit 33. The PTP protocol engine 32 may operate under either the one-step or two-step PTP protocol.

The offset and skew estimation unit 33 receives PTP timestamps from the PTP protocol engine 32. Based on this information, the offset and skew estimation unit calculates a current estimation of the offset and skew of the slave clock 35 compared to the clock in the PTP master 1. Various methods for performing this calculation are set out the embodiments of the present invention.

The server time estimation unit 34 uses the offset and skew estimated by the offset and skew estimation unit 33 to update the output of the slave clock 35 and provides this estimate of the master time to other functions in the slave device 3. The calculations performed by the server time estimation unit 34 are illustrated in Figure 12.

*Basic Clock Model*

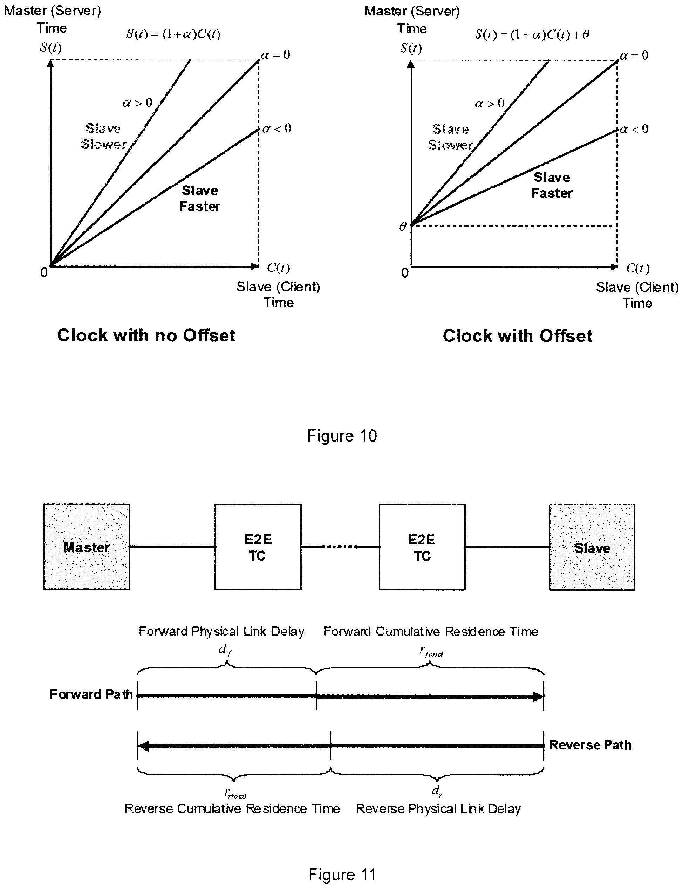

First we define a *generalized* clock offset and skew equation for the synchronization problem. It is assumed that at any particular time instant, the instantaneous view of the relationship between the master (server) clock with timeline $S(t)$ and the slave (client) clock with timeline $C(t)$, can be described by the well-known simple skew clock model depicted in Figure 10, and described by the equation,

$$S(t) = (1+\alpha)C(t) + \theta, \qquad (1)$$

where $\theta$ is the time offset and $\alpha$ is the skew (frequency offset) which is a very small quantity in the order of parts-per-million. This snapshot is an instantaneous view of how well the two clocks are (mis)aligned. Figure 10 illustrates the influence of $\theta$ and $\alpha$ on the alignment.

The above equation can be extended to account for the case where the master clock and slave clock exchange PTP messages over a communication link with delay and with the messages passing through a network of E2E TCs. It is assumed that the nth Sync message travels from a master to a slave experiences a fixed physical link (or propagation) delay of $d_f$ plus variable cumulative residence time of $r_{fftotal,n}$ as shown in Figure 11. Similarly, it is assumed that the nth Delay_Req message sent from the slave to the master experiences a fixed delay of $d_r$ plus variable cumulative residence time of $r_{rtotal,n}$.

The master and slave exchange messages using the delay-request delay-response mechanism described above with respect to Figure 1 and Figure 2. For the nth Sync message which departs the master with timestamp $T_{1,n} \in S(t)$ and arrives at the slave with timestamp $T_{2,n} \in C(t)$ after having experienced delays of $d_f$ and $r_{fftotal,n}$, the simple skew clock model above can be extended to account for the travel time to obtain the following expression

$$(T_{1,n} + d_f + r_{fftotal,n}) = (1+\alpha)T_{2,n} + \theta \qquad (2)$$

For the nth Delay_Req message which departs the slave with timestamp $T_{3,n} \in C(t)$ and arrives at the master with timestamp $T_{4,n} \in S(t)$ after having experienced delays of $d_r$ and $r_{rtotal,n}$, we obtain the following expression

$$(T_{4,n} - d_r - r_{rtotal,n}) = (1+\alpha)T_{3,n} + \theta \qquad (3)$$

A key assumption here is that the message exchange occur over a period of time so small that the offset $\theta$ can be assumed constant over that period. Below are set out methods according to two embodiments of the present invention for computing the offset $\theta$ and skew $\alpha$ using the Sync and Delay_Req message exchanges.

*Simple Linear Approximation Technique for Offset and Skew Estimation using E2E TCs*

Adding equations (2) and (3) and rearranging gives the overall clock offset $\theta$ as

$$\theta = \frac{(T_{1,n} + T_{4,n}) - (1+\alpha)(T_{2,n} + T_{3,n}) + (d_f - d_r) + (r_{ftotal,n} - r_{rtotal,n})}{2}$$
$$= \frac{(T_{1,n} + T_{4,n}) - (1+\alpha)(T_{2,n} + T_{3,n})}{2} + \frac{(d_f - d_r)}{2} + \frac{(r_{ftotal,n} - r_{rtotal,n})}{2} \qquad (4)$$
$$= \theta_{raw} + \theta_{prop} + \theta_{res}$$

where,

- $\theta_{raw} = [(T_{1,n} + T_{4,n}) - (1 + \alpha)(T_{2,n} + T_{3,n})]/2$ is the raw offset or true offset in the absence of any asymmetries in the system,
- $\theta_{prop} = (d_f - d_r)/2$ is the offset compensation due to asymmetry in the physical link (or propagation) delay, and
- $\theta_{res} = (r_{ftotal,n} - r_{rtotal,n})/2$ is the offset compensation due to asymmetry in the cumulative residence times.

The raw offset $\theta_{raw}$ is the simplest quantity often computed during clock synchronization because the system is assumed to be symmetric in the average sense (the average delay in both directions on the path are assumed to be equal). An asymmetric path exists when the fixed delay components and/or residence time components in both directions are unequal. It is assumed that the physical link asymmetry is manually calibrated and compensated for but the asymmetry due to unequal residence times is compensated for using the E2E TCs.

The offset $\theta_{prop}$ can be determined as described in ITU-T Rec G.8271 [1] and added to the raw offset $\theta_{raw}$. For perfectly symmetric links, $\theta_{prop} = 0$. The E2E TCs provide a means of measuring $r_{ftotal,n}$ and $r_{rtotal,n}$ from which offset $\theta_{res}$ can be calculated. In the absence of the TCs (i.e., in the end-to-end time transfer case without network timing support), the offset $\theta_{res}$ is often ignored by assuming that the average delays in both directions on the path are equal. No such assumption is required since the E2E TCs allow us to compute $\theta_{res}$ accurately. Next we describe now how the skew can be estimated using the Sync and Delay_Req messages. Let $\alpha_1$ denote the component of the skew that can be estimated from the Sync message exchange. For the (n-1) and nth Sync message exchange equation (2) provides the following

$$(T_{1,n-1} + d_f + r_{ftotal,n-1}) = (1+\alpha_1)T_{2,n-1} + \theta \qquad (5)$$

$$(T_{1,n} + d_f + r_{ftotal,n}) = (1+\alpha_1)T_{2,n} + \theta \qquad (6)$$

Subtracting (5) from (6), gives

$$(T_{1,n} - T_{1,n-1}) + (r_{ftotal,n} - r_{ftotal,n-1}) = (1+\alpha_1)(T_{2,n} - T_{2,n-1}) \qquad (7)$$

$$\alpha_1 = \frac{(T_{1,n} - T_{1,n-1}) + (r_{ftotal,n} - r_{ftotal,n-1})}{(T_{2,n} - T_{2,n-1})} - 1 \qquad (8)$$

Let $\alpha_2$ denote the component of the skew that can be estimated from the Delay_Req message exchange. For the (n-1) and nth Delay_Req message exchange equation (3) provides the following

$$(T_{4,n-1} - d_r - r_{rtotal,n-1}) = (1 + \alpha_2)T_{3,n-1} + \theta \qquad (9)$$

$$(T_{4,n} - d_r - r_{rtotal,n}) = (1 + \alpha_2)T_{3,n} + \theta \qquad (10)$$

Subtracting (9) from (10), gives

$$(T_{4,n} - T_{4,n-1}) - (r_{rtotal,n} - r_{rtotal,n-1}) = (1 + \alpha_2)(T_{3,n} - T_{3,n-1}) \qquad (11)$$

$$\alpha_2 = \frac{(T_{4,n} - T_{4,n-1}) - (r_{rtotal,n} - r_{rtotal,n-1})}{(T_{3,n} - T_{3,n-1})} - 1 \qquad (12)$$

The skew $\alpha$ can then be estimated from $\alpha_1$ and $\alpha_2$ as

$$\alpha = \frac{\alpha_1 + \alpha_2}{2} \qquad (13)$$

The estimated skew $\alpha$ is then used to compute the clock offset $\theta$ as given in (4). To compute the server time estimate ($\hat{S}$), filtered values of the clock offset ($\hat{\theta}$) and skew ($\hat{\alpha}$) preferably should be used. The filtering can be done using a simple exponentially weighted moving average (EWMA) filter

$$\hat{\alpha}_n = \mu\alpha_n + (1 - \mu)\hat{\alpha}_{n-1}, \; 0 < \mu < 1 \qquad (14)$$

$$\hat{\theta}_n = \mu\theta_n + (1 - \mu)\hat{\theta}_{n-1}, \; 0 < \mu < 1 \qquad (15)$$

$$\hat{S}_n = (1 + \hat{\alpha}_n)C_n + \hat{\theta}_n \qquad (16)$$

We denote $C_n$ as the current reading of the slave's local free-running clock.

*Kalman Filter Based Technique for Offset and Skew Estimation using E2E TCs*

This section sets out models which can be used with a Kalman filter based technique to estimate the clock offset and skew. The Kalman filter [2] allows the use of measurements of a process observed over time, containing noise and other inaccuracies, to produce values (estimates) that tend to be closer to the true values of the measurements and their associated calculated values.The Kalman filter produces estimates of the true values of measurements and their associated calculated values by predicting a value, estimating the uncertainty of the predicted value, and computing a weighted average of the predicted value and the measured value.

In order to use the Kalman filter (to estimate the internal state of a process given only a sequence of noisy observations), the process must be modelled in accordance with the framework of the Kalman filter.Consider a state-space model described by the following pair of equations

$$\text{State Equation: } X_n = A_n X_{n-1} + w_n , \tag{17}$$

$$\text{Measurement Equation: } y_n = D_n X_n + v_n , \tag{18}$$

where $n$ is a nonnegative time index, $A_n$ is a known $M$-by-$M$ state transition matrix, $X_n$ is the M-dimensional state (or parameter) vector, $w_n$ is an $M$-dimensional process noise vector which is assumed to be drawn from a zero mean multivariate normal distribution with covariance $Q_n = E[w_n w_n^T]$, $w_n \sim N(0, Q_n)$, $y_n$ is the measurement, $D_n$ is a known $1 \times M$-dimensional measurement matrix which maps the true state space into the measurement space, $v_n$ is the measurement noise which is assumed to be zero mean Gaussian white noise with covariance $R_n = E[v_n v_n^T]$, $v_n \sim N(0, R_n)$, and T denotes transpose. It is assumed in the model that the initial state, and the noise vectors at each step $\{X_0, w_1, ..., w_n, v_1, ..., v_n\}$ are mutually independent.

The notation $\hat{X}_{n,m}$ used below represents the estimate of $X$ at time $n$ given observations up to, and including at time $m$. The Kalman filter equations is most often conceptualized as two distinct phases: Predict and Update as described below.

*Predict Phase:*

The predict phase uses the state estimate from the previous timestep to produce an estimate of the state at the current timestep.

- Predicted (*a priori*) state estimate:

$$\hat{X}_{n,n-1} = A_n \hat{X}_{n-1,n-1} \tag{19}$$

This predicted state estimate is also known as the *a priori* state estimate because, although it is an estimate of the state at the current timestep, it does not include observation information from the current timestep.
- Predicted (*a priori*) estimate covariance:

$$P_{n,n-1} = A_n P_{n-1,n-1} A_n^T + Q_n \tag{20}$$

*Update Phase:*

In the update phase, the current a priori prediction is combined with current observation information to refine the state estimate. This improved estimate is termed the a posteriori state estimate.

- Innovation or measurement residual:

$$\tilde{z}_n = y_n - D_n \hat{X}_{n,n-1} \tag{21}$$

- Innovation (or residual) covariance:

$$S_n = D_n P_{n,n-1} D_n^T + R_n \tag{22}$$

- Optimal Kalman gain:

$$K_n = P_{n,n-1} D_n^T S_n^{-1} = P_{n,n-1} D_n^T [D_n P_{n,n-1} D_n^T + R_n]^{-1} \tag{23}$$

- Updated (*a posteriori*) state estimate:

$$\hat{X}_{n,n} = \hat{X}_{n,n-1} + K_n \tilde{z}_n = \hat{X}_{n,n-1} + K_n(y_n - D_n\hat{X}_{n,n-1}) \qquad (24)$$

This is the *a posteriori* state estimate at time *n* given observations up to and including at time *n*. The second term in the above equation is called the correction term and it represents the amount by which to correct the propagated state estimate due to our measurement. Inspection of the Kalman gain equation shows that if the measurement noise is large, $R_n$ will be large, so that $K_n$ will be small and we would not give much credibility to the measurement *y* when computing the next $\hat{X}$. On the other hand, if the measurement noise is small, $R_n$ will be small, so that $K_n$ will be large and we will give a lot of credibility to the measurement when computing the next $\hat{X}$.

- Updated (*a posteriori*) estimate covariance:

$$P_{n,n} = (I - K_nD_n)P_{n,n-1} \qquad (25)$$

This is the *a posteriori* error covariance matrix (a measure of the estimated accuracy of the state estimate).

Typically, the two phases alternate, with the prediction advancing the state until the next scheduled observation, and the update incorporating the observation. Practical implementation of the Kalman Filter requires getting a good estimate of the noise covariance matrices $Q_n$ and $R_n$.

*Development of the Measurement Equation*

It is assumed that a Sync message which travels from a master to a slave through a network of E2E TCs experiences a fixed delay *d,* variable cumulative residence time $r_{ftotal}$ ,plus a stochastic delay $\varepsilon$ (to account for all other delay components in the system). Similarly, we assume a Delay_Req message sent from the slave to the master experiences a fixed delay of *d,* variable cumulative residence time $r_{rtotal}$, and a variable stochastic delay $\gamma$. It is further assumed that the fixed delay components in both directions are equal, $d_f = d_r = d$ (symmetric communication paths) but the messages experience variables delays such queuing delays.The variables $\theta_n$ and $\alpha_n$ are the offset and skew during the nth Sync message exchange. Equations (2) and (3) above can be rewrittento account for the above conditions with the following equations:

$$(T_{1,n} + d + r_{ftotal,n} + \varepsilon_n) = (1 + \alpha_n)T_{2,n} + \theta_n \qquad (26)$$

$$(T_{4,n} - d - r_{rtotal,n} - \gamma_n) = (1 + \alpha_n)T_{3,n} + \theta_n \qquad (27)$$

With the above definitions in mind, adding (26) and (27) obtains the measurement equation as

$$(T_{1,n} + T_{4,n}) + (r_{ftotal,n} - r_{rtotal,n}) + (\varepsilon_n - \gamma_n) = (1 + \alpha_n)(T_{2,n} + T_{3,n}) + 2\theta_n$$
$$(T_{1,n} - T_{2,n}) + (T_{4,n} - T_{3,n}) + (r_{ftotal,n} - r_{rtotal,n}) = 2\theta_n + \alpha_n(T_{2,n} + T_{3,n}) + (\gamma_n - \varepsilon_n) \qquad (28)$$

The measurement equation above can be rewritten as

$$\underbrace{(T_{1,n} - T_{2,n}) + (T_{4,n} - T_{3,n}) + (r_{ftotal,n} - r_{rtotal,n})}_{y_n} = \underbrace{2\theta_n + \alpha_n(T_{2,n} + T_{3,n})}_{D_nX_n} + \underbrace{(\gamma_n - \varepsilon_n)}_{v_n} \qquad (29)$$

where

*n* is a nonnegative time index,
$y_n = (T_{1,n} - T_{2,n}) + (T_{4,n} - T_{3,n}) + (r_{ftotal,n} - r_{rtotal,n})$ is a scalar,
$D_n = [2 \ (T_{2,n} + T_{3,n})]$ is a $1 \times 2$ matrix,

$X_n^T = [\theta_n \quad \alpha_n]$ is a vector, and

$v_n = (\gamma_n - \varepsilon_n)$ is the measurement noise.

Alternatively, in the case where the forward delay $d_f$ and reverse delay $d_r$ are unequal but are known (see equations (2) and (3)), the measurement equation can be obtained as

$$\underbrace{(T_{1,n} - T_{2,n}) + (T_{4,n} - T_{3,n}) + (d_f - d_r) + (r_{ftotal,n} - r_{rtotal,n})}_{y_n} = \underbrace{2\theta_n + \alpha_n(T_{2,n} + T_{3,n})}_{D_n X_n} + \underbrace{(\gamma_n - \varepsilon_n)}_{v_n}$$

$$(30)$$

where $y_n = (T_{1,n} - T_{2,n}) + (T_{4,n} - T_{3,n}) + (d_f - d_r) + (r_{total,n} - r_{rtotal,n})$ is a scalar. The quantity $(d_f - d_r)$ accounts for the fixed delay asymmetry in the system. The above more general equation allows for known delays and asymmetries to be accounted for in the Kalman Filter formulation.

The nth sampling interval is considered to be the period in which the nth Sync and nth Delay_Req messages exchanges occur.

*Development of the State (Process) Equation*

Next the clock (process) model parameters $A$ and $w_n$ are derived. The clock skew between two points $T_{1,n}$ and $T_{1,n-1}$ can be estimated given two clock offsets $\theta_n$ and $\theta_{n-1}$ as

$$\alpha_{n-1} = \frac{\theta_n - \theta_{n-1}}{T_{1,n} - T_{1,n-1}} . \qquad (31)$$

The process dynamics for the clock while accounting for process noise can be expressed as

$$\theta_n = \theta_{n-1} + \alpha_{n-1}(T_{1,n} - T_{1,n-1}) + w_{\theta,n}$$
$$\alpha_n = \alpha_{n-1} + w_{\alpha,n} \qquad (32)$$

where $w_n^T = [w_{\theta,n} \quad w_{\alpha,n}]$ is the process noise vector which is assumed to be drawn from a zero mean normal distribution with covariance $Q_n = E[w_n w_n^T]$. The system can be described by the following two-state dynamic model

$$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} = AX_{n-1} + w_n , \qquad (33)$$

where $A_n$ is the known 2-by-2 state transition matrix.If the time between Sync messages is fixed, then, $\Delta T_n = (T_{1,n} - T_{1,n-1}) = \Delta t$ is a constant term, and

$$A = \begin{bmatrix} 1 & (T_{1,n} - T_{1,n-1}) \\ 0 & 1 \end{bmatrix} = \begin{bmatrix} 1 & \Delta t \\ 0 & 1 \end{bmatrix} . \qquad (34)$$

The clock offset ($\hat{\theta}$) and skew ($\hat{\alpha}$) estimated at the client using any of the above methods can be used to compute the server time $\hat{S}$ as illustrated inFigure 12.

*Syntonization of Transparent Clocks to Master*

Consider the case where a TC contains a free-running oscillator with frequency accuracy no worse than $\pm 100$ ppm. If residence time is measured using this oscillator, there will be an error of the order of the residence time multiplied by the actual frequency offset. Optimum synchronization performance is obtained when all TCs on a synchronization path are frequency locked (syntonized) to the master clock. If a TC is not frequency synchronized to the GM, a TC with a $\pm 100$ ppm accuracy will contribute a measurement error of $\pm (0.0001 \times 10 \text{ ms}) = \pm 1 \mu\text{s}$ (or $\pm 1000$ ns) to the residence time if the ideal residence time is 10 ms. A good thing is that oscillators do not typically operate at the extreme ends of their accuracy limits.

To reduce this error, IEEE 1588 Version 2 allows the TC to be syntonized, i.e., synchronized in frequency, to the GM. Each TC will use its own internal mechanisms to measure frequency offset relative to the GM and to synthesize a frequency signal that is syntonized with the GM. This synthesis may be done via hardware, firmware, or software.

Assume a network with nodes having standard Ethernet oscillators, with nominal rates of 25 MHz for 100 Mbit/s Ethernet and 125 MHz for 1 Gbit/s Ethernet. This means that the phase measurement granularity in the TC and ordinary clock can be as much as 40 ns. Additional phase error will result from the variable component of latency in the Ethernet physical layer (PHY) (the fixed component can be specified by the manufacturer in the design).

Consider the case of a syntonized TC local oscillator. If the frequency offset between the GM and TC oscillator is measured and a syntonized frequency is created, the use of this frequency for the TC delay computation will greatly reduce the magnitude of the TC measurement errors. The phase step magnitude will now be on the order of the syntonized frequency measurement accuracy multiplied by the synch interval. For example, if the phase measurement granularity is 40 ns (assuming a 25 MHz oscillator for 100 Mbit/s Ethernet) and the TC oscillator frequency offset is measured/syntonized over 100 ms, then the measured frequency offset is $40 \times 10^{-9}\text{s}/0.1 \text{ s} = 400 \times 10^{-9} = 0.4$ ppm (parts-per-million). The TC measurement error or offset now is $(400 \times 10^{-9})(0.01 \text{ s}) = 4$ ns, i.e., the TC measurement error is reduced from the 1000 ns computed when the free-running local oscillator is used for the measurement by a factor of 250. In practice, the reduction will not be this large because other effects are present, e.g., oscillator phase noise and drifts due to temperature effects, phase measurement error due to the variable portion of the PHY latency, and frequency measurement granularity.

Thus, to conclude, the timing options available for TC for delay measurements are:

- **Both E2E and P2P TCs:** A TC uses a local free-running oscillator embedded in the TC

- **Both E2E and P2P TCs:** A TC uses a signal that is syntonized to the GM

- **P2P TCs Only:** A TC uses a signal that is time synchronized to the GM. The TC computes a time offset which it uses to align its clock.

For most accurate residence time measurements, the PTP clocks in each TC should be syntonized with the GM. Syntonization only requires correction to the TC oscillator frequency. The TC host processor can use the ingress timestamps from Sync messages to determine a frequency (rate) correction required for the PTP clock. Alternatively, syntonization may be handled on the TC host processor without adjusting the frequency of the TC clocks. The frequency correction may be used to modify the computed residence times inserted into Follow_Up and Delay_Resp messages. This method may not be used with one-step operation.

*Limits of using Unsyntonized Transparent Clocks*

In this section the linear approximation model is used to derive simple limits of using unsyntonized TCs. It is assumed that the slave has no clock skew with respect to the master ($\alpha = 0$) to allow us to determine the clock (time) offset error when the TCs are unsyntonized.

If $\theta_s$ is the slave clock offset when the TCs are syntonized and the communication is over a symmetric path, then we can write the following

$$\theta_s = \frac{(T_1 + T_4) - (T_2 + T_3) + (r_{ftotal} - r_{rtotal})}{2} \qquad (35)$$

If $\theta_u$ is the slave clock offset when the TCs are unsyntonized and it is assumed that only one TC on the communication path with skew $\alpha_{TC}$, then the following results

$$\theta_u = \frac{(T_1 + T_4) - (T_2 + T_3) + (1 + \alpha_{TC})(r_{ftotal} - r_{rtotal})}{2} \qquad (36)$$

Then the clock offset error due to unsyntonized TC is given as

$$\theta_e = \theta_u - \theta_s = \frac{\alpha_{TC}(r_{ftotal} - r_{rtotal})}{2} \qquad (37)$$

If the skew of the TC is off by $\alpha_{TC}$ =100 ppm (maximum frequency offset for Ethernet) from the master, then

$$\theta_e = \frac{10^{-4}(r_{ftotal} - r_{rtotal})}{2}$$

For some mobile wireless (see [1]), $\theta_e$ is required to be no more than 1 microsecond. For this case

$$10^{-6} \geq \frac{10^{-4}(r_{ftotal} - r_{rtotal})}{2}$$

$$(r_{ftotal} - r_{rtotal}) \leq 0.2 \text{ ms}$$

If $\alpha_{TC}$ = -100 ppm, then ($r_{rtotal}$ - $r_{ftotal}$) ≤ 0.2 ms. This means that for $\alpha_{TC}$ =±100 ppm, the offset error will not be greater than 1 microsecond if the maximum asymmetry in the forward and reverse cumulative residence times is not greater than 0.2 ms or (200 microseconds). This means unsyntonized Ethernet switches can be used as long as this asymmetry is not exceeded. Note that this is for the maximum TC skew of 100 ppm. Larger asymmetries can be tolerated if the TC skewsare smaller. This analysis shows that unsyntonized TCs can be used as long as certain conditions are met.Thus, the accuracy of the residence time measurement and insertion into the PTP message has a direct consequence to the synchronization accuracy.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display (for example in the design of the business process). The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention as set out in the claims.

In particular, although the methods of the above embodiments have been described as being implemented on the systems of the embodiments described, the methods and systems of the present invention need not be implemented in conjunction with each other, but can be implemented on alternative systems or using alternative methods respectively.

**References**

[1]. ITU-T Recommendation G.8271/Y.1366, Time and phase synchronization aspects of packet networks, Feb. 2012.
[2]. R. E. Kalman, "A New Approach to Linear Filtering and Prediction Problems," Transaction of the ASME-Journal of Basic Engineering, March 1960,pp. 35-45.

**Claims**

1. A method for estimating the skew and offset of a slave clock (5) in a slave device (3) in relation to a master clock (4) in a master device (1), the slave device and the master device being connected by a network (2), the method including the steps of:

   exchanging timing messages (21) between the master device and the slave device over the network, each timing message passing through at least one end-to-end transparent clock (6);
   recording timestamps which are the times of the sending and receiving said messages according to the respective clocks;
   recording the residence time of each message passing through the or each transparent clock; and
   estimating the skew and offset of the slave clock (5) using the said timestamps and said residence times,
   the step of estimating the skew and offset uses a Kalman filter,
   the method **characterized in that** to estimate the skew $\alpha_n$ and the offset $\theta_n$ at time $n$, the Kalman filter is applied to:

   the state equation
   $$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix}$$ and
   to the measurement equation $y_n = D_n X_n + v_n$
   wherein:

   $Y_n = (T_{1,n} - T_{2,n}) + (T_{4,n} - T_{3,n}) + (d_f - d_r) + (r_{ftotal,n} - r_{rtotal,n})$ is a scalar,
   $D_n = [2 \; (T_{2,n} + T_{3,n})]$ is a 1×2 matrix,
   $X_n^T = [\theta_n \quad \alpha_n]$ is a vector and
   $v_n = (\gamma_n - \varepsilon_n)$ is the measurement noise, and wherein:

   $T_{1,n}$ is the time of departure of the $n$th Sync message as measured by the master clock;
   $T_{2,n}$ is the time of receipt as recorded by the slave clock on receipt of the $n$th Sync message;
   $T_{3,n}$ is the time of transmission of the $n$th Delay_Req message as recorded by the slave clock;
   $T_{4,n}$ is the time of receipt of the $n$th Delay_Req message as recorded by the master clock;
   $r_{ftotal,n}$ and $r_{rtotal,n}$ are the residence times of the nth packet in the forward and reverse directions respectively,
   $d_f$ is the fixed physical link delay in the forward direction; and
   $d_r$ is the fixed physical link delay in the reverse direction,
   $\varepsilon$ is the stochastic delay in the transmission of messages between the master and the slave device; and
   $\gamma$ is the stochastic delay in the transmission of messages between the slave and the master device.

2. A method according to claim 1 further including the step of synchronizing the output of the slave clock (5) to the master clock (4) using said estimated offset and skew.

3. A slave device (3) connected to a master device (1) having a master clock (4) by a network (2) containing at least one end-to-end transparent clock (6), the slave device having a slave clock (5) and a processor, the slave device being arranged to:

   exchange timing messages (21) with the master device (1) over said network (2) and record timestamps which are the times of sending and receiving said messages according to the respective clocks; and

extract from said messages the residence time of each message passing through the or each transparent clock (6), wherein:

the processor is arranged to:

estimate the skew and offset of the slave clock (5) compared to the master clock (4) using said timestamps and said residence times,

the processor estimates the skew and offset using a Kalman filter,

the slave device **characterised in that** to estimate the skew $\alpha_n$ and the offset $\theta_n$ at time $n$, the Kalman filter is applied to:

the state equation $X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix}$ and

to the measurement equation $y_\eta = D_n X_n + v_n$

wherein:

$Y_n = (T_{1,n} - T_{2,n}) + (T_{4,n} - T_{3,n}) + (d_f - d_r) + (r_{ftotal,n} - r_{rtotal,n})$ is a scalar,

$D_n = [2 (T_{2.n} + T_{3.n})]$ is a $1 \times 2$ matrix,

$X_n^T = [\theta_n \quad \alpha_n]$ is a vector and

$v_n = (\gamma_n - \varepsilon_n)$ is the measurement noise, and wherein:

$T_{1,n}$ is the time of departure of the $n$th Sync message as measured by the master clock;

$T_{2,n}$ is the time of receipt as recorded by the slave clock on receipt of the $n$th Sync message;

$T_{3,n}$ is the time of transmission of the $n$th Delay_Req message as recorded by the slave clock;

$T_{4,n}$ is the time of receipt of the $n$th Delay_Req message as recorded by the master clock;

$r_{ftotal,n}$ and $r_{rtotal,n}$ are the residence times of the $n$th packet in the forward and reverse directions respectively,

$d_f$ is the fixed physical link delay in the forward direction; and

$d_r$ is the fixed physical link delay in the reverse direction,

$\varepsilon$ is the stochastic delay in the transmission of messages between the master and the slave device; and

$\gamma$ is the stochastic delay in the transmission of messages between the slave and the master device.

4. A slave device (3) according to claim 3 wherein the processor is further arranged to synchronize the output of the slave clock (5) to the master clock (4) using said estimated offset and skew.

5. A system including:

a master device (1) having a master clock (4);

a slave device (3) having a slave clock (5) and a processor; and

a network (2) connecting said master device and said slave device and having at least one end-to-end transparent clock (6), wherein:

the slave device is a slave device according to any one of claims 3-4; and

the or each transparent clock (6) is arranged to:

record the residence time of each message passing through the transparent clock.

**Patentansprüche**

1. Verfahren zum Schätzen des Skews und des Versatzes einer Slave-Uhr (5) in einer Slave-Vorrichtung (3) in Beziehung zu einer Master-Uhr (4) in einer Master-Vorrichtung (1), wobei die Slave-Vorrichtung und die Master-Vorrichtung durch ein Netzwerk (2) verbunden sind, wobei das Verfahren die Schritte beinhaltet:

Austauschen von Zeiteinteilungsnachrichten (21) zwischen der Master-Vorrichtung und der Slave-Vorrichtung über das Netzwerk, wobei jede Zeiteinteilungsnachricht durch wenigstens eine transparente End-to-End-Uhr (6) hindurchgeht;

Aufzeichnen von Zeitstempeln, die die Zeiten des Sendens und des Empfangens der Nachrichten gemäß den jeweiligen Uhren sind,

Aufzeichnen der Verweilzeit jeder Nachricht, die durch die oder jede transparente Uhr hindurchgeht; und Schätzen des Skews und des Versatzes der Slave-Uhr (5) unter Verwendung der genannten Zeitstempel und Verweilzeiten;

wobei der Schritt des Schätzens des Skews und des Versatzes einen Kalman-Filter verwendet,

wobei das Verfahren **dadurch gekennzeichnet ist, dass**, um den Skew $\alpha_n$ und den Versatz $\theta_n$ zu der Zeit $n$ zu schätzen, der Kalman-Filter angewendet wird auf:

$$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} \quad \text{und}$$

die Zustandsgleichung

die Messgleichung $y_n = D_n X_n + v_n$

wobei:

$y_n = (T_{1,n} - T_{2,n}) + (T_{4,n} - T_{3,n}) + (d_f - d_r) + (r_{r_{fgesamt,n}} - r_{r_{rgesamt,n}})$ ein Skalar ist,

$D_n = [2 \ (T_{2,n} + T_{3,n})]$ eine $1 \times 2$ Matrix ist,

$$X_n^T = \begin{bmatrix} \theta_n & \alpha_n \end{bmatrix}$$ ein Vektor ist und

$v_n = (\gamma_n - \varepsilon_n)$ das Messrauschen ist, und wobei:

$T_{1,n}$ die Abreisezeit der $n$ten Sync-Nachricht ist, wie durch die Master-Uhr gemessen;

$T_{2,n}$ die Empfangszeit ist, wie durch die Slave-Uhr beim Empfang der $n$ten Sync-Nachricht gemessen;

$T_{3,n}$ die Übertragungszeit der $n$ten Delay_Req-Nachricht ist, wie durch die Slave-Uhr aufgezeichnet;

$T_{4,n}$ die Empfangszeit der $n$ten Delay_Req-Nachricht ist, wie durch die Master-Uhr aufgezeichnet;

$r_{fgesamt,n}$ und $r_{rgesamt,n}$ die Verweilzeiten des $n$ten Pakets in der Vorwärtsbeziehungsweise Rückwärtsrichtung sind,

$d_f$ die fixierte physische Verknüpfungsverzögerung in der Vorwärtsrichtung ist, und

$d_r$ die fixierte physische Verknüpfungsverzögerung in der Rückwärtsrichtung ist,

$\varepsilon$ die stochastische Verzögerung bei der Übertragung von Nachrichten zwischen der Master- und der Slave-Vorrichtung ist, und

$\gamma$ die stochastische Verzögerung bei der Übertragung von Nachrichten zwischen der Slave- und der Master-Vorrichtung ist.

2. Verfahren nach Anspruch 1, das ferner den Schritt des Synchronisierens der Ausgabe der Slave-Uhr (5) mit der Master-Uhr (4) unter Verwendung des geschätzten Versatzes und Skews beinhaltet.

3. Slave-Vorrichtung (3), die mit einer Master-Vorrichtung (1) mit einer Master-Uhr (4) über ein Netzwerk (2) verbunden ist, das wenigstens eine transparente End-to-End-Uhr (6) enthält, wobei die Slave-Vorrichtung eine Slave-Uhr (5) und einen Prozessor aufweist, wobei die Slave-Vorrichtung angeordnet ist, zum:

Austauschen von Zeiteinteilungsnachrichten (21) mit der Master-Vorrichtung (1) über das Netzwerk (2) und Aufzeichnen von Zeitstempeln, die die Zeiten des Sendens und Empfangens der Nachrichten gemäß den jeweiligen Uhren sind, und

Extrahieren aus den Nachrichten der Verweilzeit jeder Nachricht, die durch die oder jede transparente Uhr (6) hindurchgeht, wobei:

der Prozessor angeordnet ist, zum:

Schätzen des Skews und des Versatzes der Slave-Uhr (5) im Vergleich zu der Master-Uhr (4) unter Verwendung der Zeitstempel und der Verweilzeiten;

wobei der Prozessor den Skew und den Versatz unter Verwendung eines Kalman-Filters schätzt,

wobei die Slave-Vorrichtung **dadurch gekennzeichnet ist, dass**, um den Skew $\alpha_n$ und den Versatz $\theta_n$ zu der Zeit $n$ zu schätzen, der Kalman-Filter angewendet wird auf:

$$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix}$$ und

die Zustandsgleichung

die Messgleichung $y_n = D_n X_n + v_n$

wobei:

$y_n = (T_{1,n} - T_{2,n}) + (T_{4,n} - T_{3,n}) + (d_f - d_r) + (r_{ffgesamt,n} - r_{rgesamt,n})$ ein Skalar ist,

$D_n = [2 (T_{2.n} + T_{3.n})]$ eine 1×2 Matrix ist,

$X_n^T = [\theta_n \quad \alpha_n]$ ein Vektor ist und

$v_n = (\gamma_n - \varepsilon_n)$ das Messrauschen ist, und wobei:

$T_{1,n}$ die Abreisezeit der $n$ten Sync-Nachricht ist, wie durch die Master-Uhr gemessen;

$T_{2,n}$ die Empfangszeit ist, wie durch die Slave-Uhr beim Empfang der $n$ten Sync-Nachricht gemessen;

$T_{3,n}$ die Übertragungszeit der $n$ten Delay_Req-Nachricht ist, wie durch die Slave-Uhr aufgezeichnet;

$T_{4,n}$ die Empfangszeit der $n$ten Delay _Req-Nachricht ist, wie durch die Master-Uhr aufgezeichnet;

$r_{fgesamt,n}$ und $r_{rgesamt,n}$ die Verweilzeiten des $n$ten Pakets in der Vorwärtsbeziehungsweise Rückwärtsrichtung sind,

$d_f$ die fixierte physische Verknüpfungsverzögerung in der Vorwärtsrichtung ist, und

$d_r$ die fixierte physische Verknüpfungsverzögerung in der Rückwärtsrichtung ist,

$\varepsilon$ die stochastische Verzögerung bei der Übertragung von Nachrichten zwischen der Master- und der Slave-Vorrichtung ist, und

$\gamma$ die stochastische Verzögerung bei der Übertragung von Nachrichten zwischen der Slave- und der Master-Vorrichtung ist.

4.  Slave-Vorrichtung (3) nach Anspruch 3, wobei der Prozessor ferner angeordnet ist, um die Ausgabe der Slave-Uhr (5) mit der Master-Uhr (4) unter Verwendung des geschätzten Versatzes und Skews zu synchronisieren.

5.  System, beinhaltend:

eine Master-Vorrichtung (1) mit einer Master-Uhr (4);
eine Slave-Vorrichtung (3) mit einer Slave-Uhr (5) und einem Prozessor; und
ein Netzwerk (2), das die Master-Vorrichtung und die Slave-Vorrichtung verbindet und wenigstens eine transparente End-to-End-Uhr (6) aufweist, wobei:

die Slave-Vorrichtung eine Slave-Vorrichtung nach einem der Ansprüche 3-4 ist, und
die oder jede transparente Uhr (6) angeordnet ist, zum:
Aufzeichnen der Verweilzeit jeder Nachricht, die durch die transparente Uhr hindurchgeht.

**Revendications**

1.  Procédé d'estimation du biais et du décalage d'une horloge esclave (5) dans un dispositif esclave (3) par rapport à une horloge maître (4) dans un dispositif maître (1), le dispositif esclave et le dispositif maître étant connectés par un réseau (2), le procédé comprenant les étapes consistant à :

échanger des messages de synchronisation (21) entre le dispositif maître et le dispositif esclave sur le réseau, chaque message de synchronisation passant par au moins une horloge transparente de bout en bout (6) ;
enregistrer des horodatages qui sont les instants d'envoi et de réception desdits messages selon les horloges respectives ;
enregistrer le temps de séjour de chaque message traversant la ou chaque horloge transparente ; et
estimer le biais et le décalage de l'horloge esclave (5) à l'aide desdits horodatages et desdits temps de séjour, l'étape d'estimation du biais et du décalage utilise un filtre de Kalman,

le procédé étant **caractérisé en ce que** pour estimer le biais $\alpha_n$ et le décalage $\theta_n$ à l'instant $n$, le filtre de Kalman est appliqué à :

$$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} \text{ et}$$

l'équation d'état

à l'équation de mesure $y_n = D_n X_n + v_n$

dans lequel :

$y_n = (T_{1,n} - T_{2,n}) + (T_{4,n} - T_{3,n}) + (d_f - d_r) + (r_{ftotal,n} - r_{rtoatal,n})$ est un scalaire,

$D_n = [2 \ (T_{2.n} + T_{3.n})]$ est une matrice $1 \times 2$,

$$X_n^T = \begin{bmatrix} \theta_n & \alpha_n \end{bmatrix}$$ est un vecteur et

$v_n = (\gamma_n - \varepsilon_n)$ est le bruit de mesure, et dans lequel :

$T_{1,n}$ est l'instant de départ du $n$ième message Sync tel que mesuré par l'horloge maître ;
$T_{2,n}$ est l'instant de réception tel qu'enregistré par l'horloge esclave à la réception du même message Sync ;
$T_{3,n}$ est l'instant d'émission du $n$ième message Delay_Req tel qu'enregistré par l'horloge esclave ;
$T_{4,n}$ est l'instant de réception du $n$ième message Delay _ Req tel qu'enregistré par l'horloge maître ;
$r_{ftotal,n}$ et $r_{rtotal,n}$ sont les temps de séjour du $n$ième paquet respectivement dans les sens avant et arrière,
$d_f$ est le délai de liaison physique fixe dans le sens avant ; et
$d_r$ est le délai de liaison physique fixe dans le sens arrière,
$\varepsilon$ est le délai stochastique de transmission de messages entre le dispositif maître et le dispositif esclave ; et
$\gamma$ est le délai stochastique de transmission de messages entre l'esclave et le maître.

2. Procédé selon la revendication 1, comprenant en outre l'étape de synchronisation de la sortie de l'horloge esclave (5) avec l'horloge maître (4) en utilisant lesdits biais et décalage estimés.

3. Dispositif esclave (3) connecté à un dispositif maître (1) ayant une horloge maître (4) par un réseau (2) contenant au moins une horloge transparente de bout en bout (6), le dispositif esclave ayant une horloge esclave (5) et un processeur, le dispositif esclave étant agencé pour :

échanger des messages de synchronisation (21) avec le dispositif maître (1) sur ledit réseau (2) et enregistrer des horodatages qui sont les instants d'envoi et de réception desdits messages selon les horloges respectives ; et extraire desdits messages le temps de séjour de chaque message traversant la ou chaque horloge transparente (6), dans lequel :
le processeur est agencé pour :

estimer le biais et le décalage de l'horloge esclave (5) par rapport à l'horloge maître (4) en utilisant lesdits horodatages et lesdits temps de séjour,
le processeur estime le biais et le décalage à l'aide d'un filtre de Kalman,
le dispositif esclave **caractérisé en ce que** pour estimer le biais $\alpha_n$ et le décalage $\theta_n$ à l'instant $n$, le filtre de Kalman est appliqué à :

$$X_n = \begin{bmatrix} \theta_n \\ \alpha_n \end{bmatrix} = \begin{bmatrix} 1 & (T_{1,n} - T_{1,n-1}) \\ 0 & 1 \end{bmatrix} \begin{bmatrix} \theta_{n-1} \\ \alpha_{n-1} \end{bmatrix} + \begin{bmatrix} w_{\theta,n} \\ w_{\alpha,n} \end{bmatrix} \text{ et}$$

l' équation d'état

à l'équation de mesure $y_n = D_n X_n + v_n$

dans lequel :

$y_n = (T_{1,n} - T_{2,n} + (T_{4,n} - T_{3,n}) + (d_f - d_r) + (r_{ftotal,n} - r_{rtotal,n})$ est un scalaire,

$D_n = [2 \ (T_{2.n} + T_{3.n})]$ est une matrice $1 \times 2$,

$$X_n^T = \begin{bmatrix} \theta_n & \alpha_n \end{bmatrix}$$ est un vecteur et

$v_n = (\gamma_n - \varepsilon_n)$ est le bruit de mesure, et dans lequel :

$T_{1,n}$ est l'instant de départ du $n$ième message Sync tel que mesuré par l'horloge maître ;

$T_{2,n}$ est l'instant de réception tel qu'enregistré par l'horloge esclave à la réception du même message Sync ;

$T_{3,n}$ est l'instant d'émission du $n$ième message Delay_Req tel qu'enregistré par l'horloge esclave ;

$T_{4,n}$ est l'instant de réception du $n$ième message Delay_Req tel qu'enregistré par l'horloge maître ;

$r_{ftotal,n}$ et $r_{rtotal,n}$ sont les temps de séjour du $n$ième paquet respectivement dans les sens avant et arrière,

$d_f$ est le délai de liaison physique fixe dans le sens avant ; et

$d_r$ est le délai de liaison physique fixe dans le sens arrière,

$\varepsilon$ est le délai stochastique de transmission de messages entre le dispositif maître et le dispositif esclave ; et

$\gamma$ est le délai stochastique de transmission de messages entre l'esclave et le maître.

4. Dispositif esclave (3) selon la revendication 3, dans lequel le processeur est en outre agencé pour synchroniser la sortie de l'horloge esclave (5) avec l'horloge maître (4) en utilisant lesdits biais et décalage estimés.

5. Système comprenant :

un dispositif maître (1) ayant une horloge maître (4) ;
un dispositif esclave (3) ayant une horloge esclave (5) et un processeur ; et
un réseau (2) connectant ledit dispositif maître et ledit dispositif esclave et ayant au moins une horloge transparente de bout en bout (6), dans lequel :

le dispositif esclave est un dispositif esclave selon l'une quelconque des revendications 3 à 4 ; et
la ou chaque horloge transparente (6) est agencée pour :
enregistrer le temps de séjour de chaque message traversant l'horloge transparente.

Figure 1

Figure 2

Figure 3

Figure 4

Figure 5

Figure 8

Figure 6

Figure 12

Figure 7

26

Figure 9

$$S(t) = (1+\alpha)C(t)$$

$$S(t) = (1+\alpha)C(t) + \theta$$

**Clock with no Offset**

**Clock with Offset**

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XU XIONG.** Quantization Error Accumulation Over Real-Time Networks: Theory and Experiments. *IEEE TRANSACTIONS ON INDUSTRIAL INFORMATICS, IEEE SERVICE CENTER, NEW YORK, NY, US*

- **R. E. KALMAN.** A New Approach to Linear Filtering and Prediction Problems. *Transaction of the ASME-Journal of Basic Engineering,* March 1960, 35-45